# EUROPÄISCHE PATENTANMELDUNG

(11) **EP 2 538 532 A1**
(43) Veröffentlichungstag der Anmeldung: **26.12.2012**
(21) Anmeldenummer: 11170687.5
(22) Anmeldetag: 21.06.2011
(51) Int. Cl.: H02M 3/335

(54) **Verfahren zum Betreiben einer Schaltwandleranordnung**

(71) Anmelder: SIEMENS AKTIENGESELLSCHAFT, 80333 München (DE)
(72) Erfinder: Hallak, Jalal, 1220 Wien (AT)

(57) **Zusammenfassung**

Die Erfindung betrifft ein Verfahren zur Regelung eines Schaltwandlers (6) in einem quasiresonanten Betrieb, wobei mittels eines PWM-Schaltreglers (1) ein erstes PWM-Signal (PWM1) mit einer variablen Taktfrequenz (f) erzeugt wird. Dabei wird ein Schaltelement mit einem zweiten PWM-Signal (PWM2) angesteuert, wobei das zweite PWM-Signal (PWM2) mittels eines Spannungsminimumsdetektors gebildet wird und jeder Einschaltimpuls des zweiten PWM-Signals (PWM2) synchronisiert ist mit einem Valley (V1, V2, V3) einer schwingenden Spannung (U_{D-S}), welche an dem Schaltelement anliegt, wobei mittels einer Nachlaufsynchronisationsschaltung durch Veränderung der Taktfrequenz (f) eine Phasenverschiebung zwischen dem ersten PWM-Signal (PWM1) und dem zweiten PWM-Signal (PWM2) gegen Null geregelt wird.

## Beschreibung

Die Erfindung betrifft ein Verfahren zur Regelung eines Schaltwandlers in einem quasiresonanten Betrieb, wobei mittels eines PWM-Schaltreglers ein erstes PWM-Signal mit einer variablen Taktfrequenz erzeugt wird. Des Weiteren betrifft die Erfindung eine Schaltwandleranordnung zur Durchführung des Verfahrens.

Schaltelemente wie beispielsweise ein Feldeffekttransistoren, Transformatoren oder Drosseln enthalten parasitäre Kapazitäten, welche zu Schaltverlusten bei hart schaltenden Wandlern führen. Bei einem hart schaltenden Wandler schwingt während der Totzeit im diskontinuierlichen Modus (DCM) die parasitäre Kapazität mit der Wandlerhauptwicklung um eine Eingangsspannung bzw. Zwischenkreisspannung. Die Spannung an den parasitären Kapazitäten variiert mit der Schwingung, weist aber durchgehend signifikante Werte auf. Wenn das Schaltelement im nächsten Taktzyklus einschaltet, werden die parasitären Kondensatoren über den Transistor entladen und erzeugen dabei eine hohe Stromspitze. Da diese auftritt, wenn am Schaltelement eine hohe Spannung anliegt, erzeugt sie Schaltverluste. Darüber hinaus ist die Stromspitze reich an Oberwellen, was die EMI erhöht.

Statt mit einem festen Takt zu schalten, wird bei quasiresonatem Schalten mittels eines Erkennungskreises ein Minimum (auch "Valley" genannt) der Drain-Source-Spannung des Schaltelements effektiv erfasst und das Schaltelement erst zu diesem Zeitpunkt eingeschalten. Dadurch wird die Einschaltstromspitze minimiert, da die parasitäre Kapazität auf die Mindestspannung geladen ist. Diese Art des Schaltens wird allgemein als Valley-Switching, Nulldurchgangsschalten oder quasiresonantes Schalten bezeichnet. Es führt zu einer Reduktion der Schaltverluste und der Störabstrahlung, welche bei hart schaltenden Wandlern auftreten. Da der Resonanzkreis nur während der Schaltübergänge an einem ansonsten herkömmlichen Rechtecksignalwandler eingesetzt wird, bezeichnet man dieses Schalten quasiresonant.

Im Folgenden wird jedes Minimum der am abgeschalteten Schaltelement anliegenden schwingenden Spannung als Valley bezeichnet. Das während einer Schaltperiode zeitlich zuerst auftretende Minimum wird als erstes Valley bezeichnet. Die nachfolgenden Valleys werden entsprechend ihrer zeitlichen Abfolge nummeriert, also zweites Valley, drittes Valley etc.

Das Einschalten während eines Valley bewirkt ein laufendes Zurücksetzen des Periodenbeginns (Impuls-Reset) und somit ein Anpassen der Schaltfrequenz unabhängig von der Last oder der Zwischenkreisspannung zu diesem Zeitpunkt. Diese Betriebsart beginnt an der Grenze zwischen kontinuierlichem (CCM) und diskontinuierlichem Leitungsmodus (DCM) und kommt im diskontinuierlichen Leitungsmodus voll zum Tragen.

Für den Fall, dass immer während des ersten Valley eingeschaltet wird, steigt mit sinkender Last die Schaltfrequenz, bis im Leerlauf eine Maximalfrequenz erreicht wird. Mit steigender Frequenz steigen jedoch auch die Schaltverluste, da pro Zeiteinheit mehr verlustbringende Schaltvorgänge stattfinden.

Um die zu hohe Schaltfrequenz bei wenig Last zu vermeiden, wird in der Regel der Einschaltzeitpunkt auf ein späteres Valley verlegt. Dabei kann es vorkommen, das bei bestimmten Leistungen zwischen den Valleys hin und her gesprungen werden muss, um die Ausgangsspannung konstant zu halten. Dieser Effekt wird auch "Valley-Skipping" genannt.

Der Erfindung liegt die Aufgabe zugrunde, ein gegenüber dem Stand der Technik verbessertes Verfahren zur Regelung eines quasiresonant schaltenden Schaltwandler sowie eine Schaltwandleranordnung zur Durchführung des Verfahrens anzugeben.

Erfindungsgemäß wird diese Aufgabe gelöst durch ein Verfahren nach Anspruch 1 und eine Schaltwandleranordnung nach Anspruch 6. Weiterbildungen sind in abhängigen Ansprüchen angegeben.

Dabei wird ein Schaltelement mit einem zweiten PWM-Signal angesteuert, wobei das zweites PWM-Signal mittels eines Spannungsminimumsdetektors gebildet wird und wobei jeder Einschaltimpuls des zweiten PWM-Signals synchronisiert ist mit einem Valley einer schwingenden Spannung, welche an dem abgeschalteten Schaltelement im diskontinuierlichen Modus anliegt. Zudem wird mittels einer Nachlaufsynchronisationsschaltung durch Veränderung der Taktfrequenz eine Phasenverschiebung zwischen dem ersten PWM-Signal und dem zweiten PWM-Signal gegen Null geregelt. Eine Nachlaufsynchronisationsschaltung, auch Phasenregelschleife oder Phase-locked loop (PLL) genannt, ist eine elektronische Schaltungsanordnung, mittels der die Phasenlage und die Frequenz eines Signals in der Weise beeinflusst wird, dass eine Phasenabweidung zwischen dem beeinflussten Signal und einem Referenzsignal gegen Null geht. In der vorliegenden Erfindung wird eine solche Schaltung genutzt, um das erste PWM-Signal zu beeinflussen und dessen Phasenlage gegenüber dem zweiten PWM-Signal gegen Null zu regeln. Das zweite PWM-Signal gibt dabei quasiresonantes Schalten des Schaltwandlers vor. Durch die synchrone Angleichung der beiden PWM-Signale schaltet das Schaltelement des Wandlers immer dann ein, wenn die am Schaltelement anliegende Spannung ein Minimum erreicht.

Jeder Einschaltimpuls des zweiten PWM-Signals wird mittels des Spannungsminimumsdetektors bestimmt. Verzögert sich das Auftreten eines Minimums der am Schaltelement anliegenden Spannung, verzögert sich auch der Einschaltimpuls des zweiten PWM-Signals. Dies wiederum veranlassten die Nachlaufsynchronisationsschaltung, einen auftretenden Phasenunterschied zwischen erstem PWM-Signal und zweitem PWM-Signal gegen Null zu regeln. Dabei wird die Taktfrequenz des PWM-Schaltreglers geändert, bis das erste PWM-Signal und das zweite PWM-Signal wieder synchronisiert sind. Es erfolgt also ein stetiger Eingriff in die Taktfrequenz, ohne die Taktfrequenz durch ein Impuls-Reset zu ändern, wie dies bei bekannten Verfahren zum quasiresonanten Schalten der Fall ist.

Dadurch wird die Regelung des Schaltwandlers gegenüber gekannten Verfahren stabiler und störungsfreier. Das von einem Spannungswandler vorgegebene Tastverhältnis wird im quasiresonanten Betrieb mit der Taktfrequenz abgestimmt. "Valley-Skipping" wird vermieden, sodass keine störenden Schaltgeräusche entstehen.

In einer Weiterbildung der Erfindung ist vorgesehen, dass mittels eines Phasendetektors die Phasenverschiebung zwischen dem ersten PWM-Signal und dem zweiten PWM-Signal ermittelt wird und dass mittels eines Frequenzreglers durch Verstellen der Taktfrequenz des PWM-Schaltreglers die Phasenverschiebung gegen Null geregelt wird. Damit ist ein einfaches Betriebsverfahren einer Nachlaufsynchronisationsschaltung angegeben.

Um den Übergang von einem Valley zu einem früher auftretenden Valley vorteilhaft zu ermöglichen, ist es sinnvoll, für die Taktfrequenz eine Minimalfrequenz und eine Maximalfrequenz vorzugeben und bei erreichter Minimalfrequenz mittels einer Umkippschaltung die Taktfrequenz auf die Maximalfrequenz zu erhöhen, wobei während der Frequenzerhöhung der Einschaltvorgang um eine Schwingungsperiode vorverlegt wird. Die Vorverlegung um eine Schwingungsperiode bewirkt, dass bei einem früheren Valley eingeschaltet wird.

Für einen vorteilhaften Übergang zu einem später auftretenden Valley ist vorgesehen, dass für die Taktfrequenz eine Maximalfrequenz vorgegeben wird und dass bei erreichter Maximalfrequenz der Einschaltvorgang um eine Schwingungsperiode verzögert wird. Diese Verzögerung bewirkt, dass bei einem späteren Valley eingeschaltet wird.

Zur Durchführung eines Übergangs zu einem früheren oder einem späteren Valley ist es sinnvoll, wenn jeder Valley-Ordnungszahl in einem Speicher ein Bereich für die Taktfrequenz vorgegeben wird. Die Valley-Ordnungszahl gibt dabei die Reihenfolge des zeitlichen Auftretens der Valley während eines Schwingvorgangs der am Schaltelement anliegenden Spannung an. Für jede Valley-Ordnungszahl sind somit eine Maximalfrequenz und eine Minimalfrequenz vorgegeben.

Zur Durchführung der Verfahren ist eine Schaltwandleranordnung zum quasiresontenten Schalten vorgesehen, welche einen PWM-Schaltregler zur Erzeugung eines ersten PWM-Signals, ein Schaltelement sowie einen Spannungsminimumsdetektor zur Erkennung eines Spannungsminimums am Schaltelement umfasst. Dabei sind ein aus dem Spannungsminimumsdetektor abgeleitetes zweiten PWM-Signal und das erste PWM-Signal einem Phasendetektor zugeführt und ein geglättetes Phasenverschiebungssignal ist dem Frequenzregler als Regelgröße zugeführt, um die Phasenverschiebung gegen Null zu regeln.

Für einen einfachen Spannungsminimumsdetektor ist vorgesehen, dass dieser als Nulldurchgangsdetektor mit nachgeschaltetem Verzögerungsglied ausgebildet ist.

Die Erfindung wird nachfolgend in beispielhafter Weise unter Bezugnahme auf die beigefügten Figuren erläutert. Es zeigen in schematischer Darstellung:
- Fig. 1: Kennliniendiagramm der Taktfrequenz über der Leistung
- Fig. 2: Blockschaltbild einer Schaltwandleranordnung
- Fig. 3: Kennliniendiagramm mit Übergang des Arbeitspunktes zu einem früheren Valley
- Fig. 4-10: Signalverläufe bei Arbeitspunktänderungen gemäß Fig. 3
- Fig. 11: Kennliniendiagramm mit Änderung des Arbeitspunktes zu einem späteren Valley
- Fig. 12-16: Signalverläufe bei Arbeitspunktänderungen gemäß Fig. 11

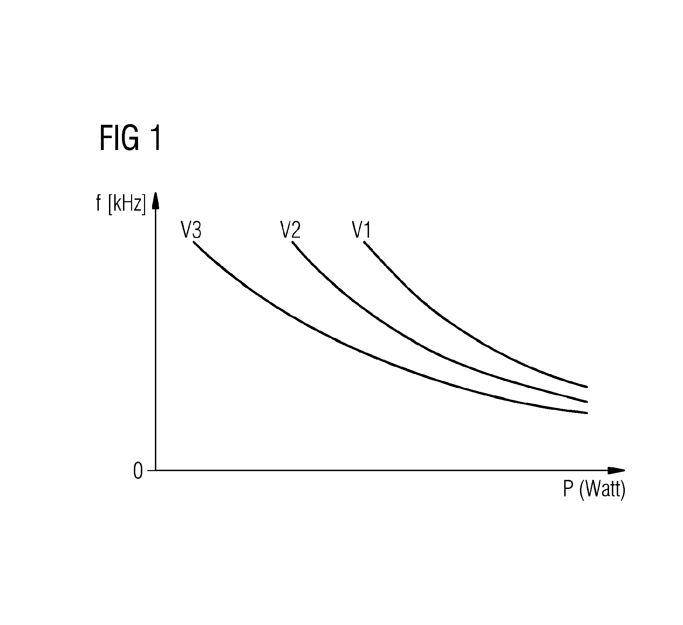

Im Kennliniendiagramm in Fig. 1 sind auf der Abszisse die vom Schaltwandler übertragene Leistung P und auf der Ordinate die Taktfrequenz f aufgetragen. Eingezeichnet sind Arbeitspunktverläufe, wobei immer in einem Valley V1, V2 oder V3 eingeschaltet wird. Jedem Valley V1, V2, V3 ist entsprechend der zeitlichen Abfolge eine Ordnungszahl zugeordnet. Das erste Valley V1 nach Beginn des Schwingvorgangs am abgeschalteten Schaltelement hat demnach die Ordnungszahl 1. Nach einer vollen Schwingungsperiode folgt das zweite Valley V2 mit der Ordnungszahl 2 usw.

Solange im Valley mit derselben Ordnungszahl eingeschaltet wird, steigt die Taktfrequenz f mit sinkender Leistung P parabolisch an. Bei gleichbleibender Taktfrequenz f bewirkt ein Wechsel zu einem Valley mit höherer Ordnungszahl ein sprunghaftes Absinken der Leistung P.

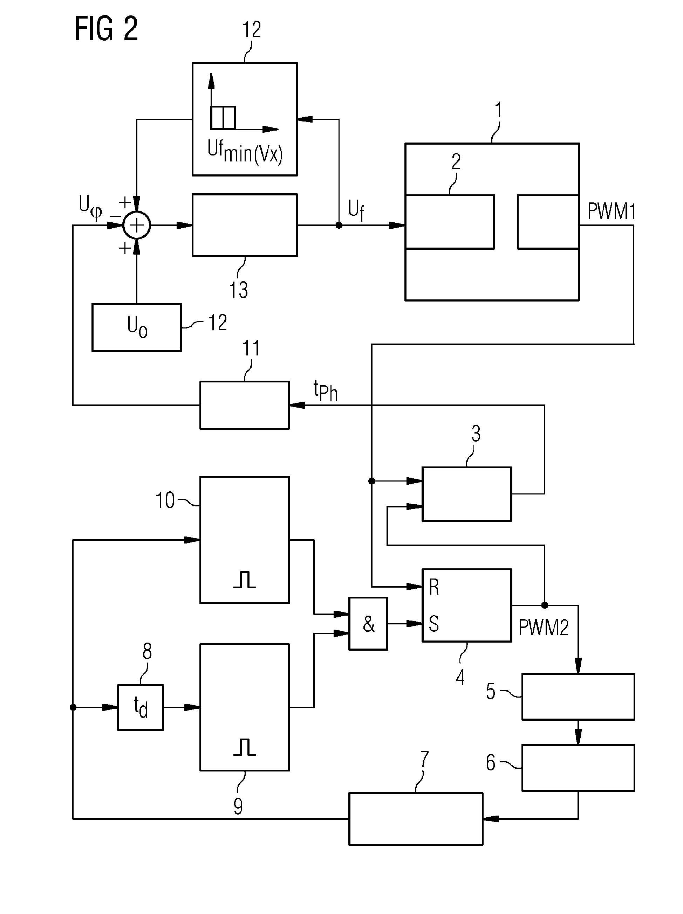

In Fig. 2 sind die einzelnen Komponenten einer beispielhaften Schaltwandleranordnung angegeben. Ein Schaltregler 1 umfasst einen Oszillator 2 und gibt ein erstes PWM-Signal PWM1 mit einem bestimmten Tastverhältnis aus, um eine Ausgangsspannung konstant zu halten. Dabei wird dem Oszillator 2 mittels eines geeigneten Frequenzsteuersignals U_{f} eine Taktfrequenz f vorgegeben.

Das erste PWM-Signal PWM1 ist einerseits einem Phasendetektor 3 und andererseits dem Reset-Eingang R einem RS-Flipflop 4 zugeführt. Das zugeführte erste PWM-Signal bestimmt die Ausschaltimpulse eines am Ausgang des RS-Flipflops 4 anliegenden zweiten PWM-Signals.

Mittels zweitem PWM-Signal PWM2 wird über eine Treiberstufe 5 der Schaltnetzteil-Wandler 6 getaktet geschaltet.

Die am abgeschalteten Schaltelement des Schaltnetzteil-Wandlers 6 anliegende Spannung ist einem Spannungsminimumsdetektor zugeführt. Dieser besteht vorteilhafterweise aus einem Nulldurchgangsdetektor 7 mit einem nachgeschalteten Verzögerungsglied 8. Die im Verzögerungsglied 8 vorgegeben Totzeit t_{d} entspricht einer Viertelschwingungsperiode der am abgeschalteten Schaltelement anliegenden Spannung. Das Ausgangssignal des Verzögerungsglieds 8 ist einem ersten Mono-Flipflop 9 zur Erzeugung eines SET-Signals zugeführt. Das unverzögerte Ausgangssignal des Nulldurchgangsdetektors 7 ist einem zweiten Mono-Flipflop 10 zur Freigabe des SET-Signals zugeführt. Über eine UND-Verknüpfung werden die Ausgangsignale der beiden Mono-Flipflop 9, 10 zu einem Signal zusammengeführt. Dieses Signal liegt am Set-Eingang S des RS-Flipflops 4 an und bestimmt die Einschaltimpulse des zweiten PWM-Signals PWM2.

Das zweite PWM-Signal PWM2 am Ausgang des RS-Flipflops 4 ist dem Phasendetektor 3 zugeführt, um die Phasenlage mit jener des ersten PWM-Signals PWM1 zu vergleichen. Das sich ergebende Phasenverschiebungssignal t_{Ph} ist einem LP-Filter 11 zugeführt.

Das am Ausgang des LP-Filters 11 anliegende, geglättete Phasenverschiebungssignal U_{ϕ} wird in weiter Folge mit einem Referenzsignal U₀ verglichen. Das resultierende Signal dient als Abweichungsgröße eines Frequenzreglers 13. Dabei erfolgt gegebenenfalls eine sprunghafte Änderung des Signals mittels einer Umkippschaltung 12, wenn das Frequenzsteuersignal U_{f} am Ausgang des Frequenzreglers 13 einen Minimal- oder Maximalwert erreicht. Durch Vorgabe dieser Grenzwerte wird ein Wechsel zu einem früheren oder späteren Valley erreicht. Das Erreichen eines Maximalwertes bewirkt ein Springen zu einem Valley höherer Ordnung, wobei die Taktfrequenz zunächst unverändert bleibt.

Das Erreichen eines Minimalwertes bewirkt das Springen zu einem Valley mit niedrigerer Ordnungszahl. Dabei bewirkt die Umkippschaltung 12 einen sprunghaften Anstieg der Taktfrequenz auf die Maximalfrequenz der neuen Valley-Ordnungszahl, indem das Signal am Eingang des Frequenzreglers sprunghaft steigt.

Einfacherweise sind für jede Valley-Ordnungszahl ein eigener Maximal- und ein eigener Minimalwert für das Frequenzsteuersignal U_{f} in einem Speicher hinterlegt.

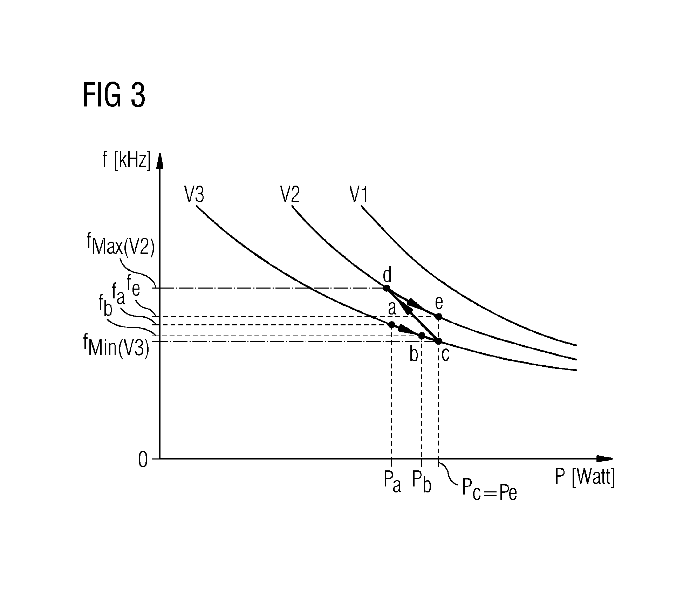

Das Erreichen eines Minimalwertes der Taktfrequenz f für ein Einschalten im dritten Valley V3 (Ordnungszahl 3) ist in Fig. 3 dargestellt.

Ausgehend von einem ersten Arbeitspunkt a mit Einschalten im dritten Valley V3 bei einer Taktfrequenz fₐ und einer Leistung Pₐ verändert sich der Arbeitspunkt b entlang der Kennlinie für das dritte Valley V3 mit steigender Leistung P_{b} und fallender Taktfrequenz f_{b}. Bei einem weiteren Absinken der Taktfrequenz f auf einen Arbeitspunkt c mit noch höherer Leistung P_{c} wird der Minimalwert f_{Min(v3)} der Taktfrequenz f erreicht. Die Umkippschaltung 12 bewirkt sodann ein Springen auf einen Arbeitspunkt d der Kennlinie für das Valley mit der nächstniedrigeren Ordnungszahl (hier Ordnungszahl 2). Dieser Arbeitspunkt d weist einen Maximalwert f_{Max}(V2) der Taktfrequenz f auf. Zudem findet ein Einschalten beim zweiten Valley V2 statt. Die dabei abfallende Leistung P regelt der Frequenzregler 13 auf einen Arbeitspunkt e mit der vorgegebenen Leistung Pₑ und einer entsprechenden Taktfrequenz fₑ .

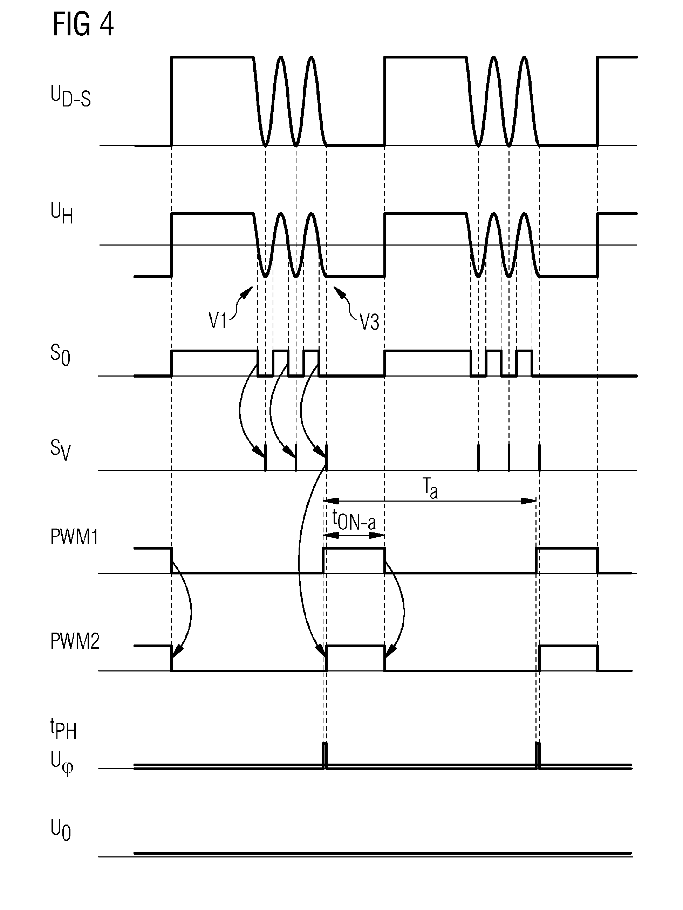

Für diesen Ablauf sind in den Figuren 4-10 die einzelnen Signale U_{D-S}, U_{H}, S₀, Sᵥ, PWM1, PWM2, t_{PH}, U_{ϕ} und U₀ über der Zeit dargestellt. Nach einem Abschaltvorgang steigt die Drain-Source-Spannung U_{D-S} sprunghaft an und geht nach einer Abmagnetisierungsphase in einen schwingenden Verlauf über. An einer Hilfswicklung liegt eine Hilfsspannung U_{H} mit derselben Resonanzschwingung um eine Nullspannung an. An dieser Hilfsspannung U_{H} werden die Nulldurchgänge detektiert und als Nulldurchgangssignal S₀ ausgegeben. Um eine Viertelperiode später weist ein Valley-Signal Sᵥ bei jedem Valley einen Impuls auf. Diese Impulse bestimmen die Aufwärtsflanken des zweiten PWM-Signals PWM2. Die Abwärtsflanken des zweiten PWM-Signals PWM2 sind mit den Abwärtsflanken des ersten PWM-Signals PWM1 synchronisiert.

Die Phasenverschiebungen der Aufwärtsflanken der beiden PWM-Signale PWM1, PWM2 werden mittels Phasendetektor 3 zunächst als gepulstes Phasenverschiebungssignal t_{PH} und nach dem LP-Filter 11 als geglättetes Phasenverschiebungssignal U_{ϕ} ausgegeben.

Dem nachfolgenden Frequenzregler 13 ist die Differenz zwischen dem Referenzsignal U₀ und diesem geglättetem Phasenverschiebungssignal U_{ϕ} zugeführt. Das geglättete Phasenverschiebungssignal U_{ϕ} ist als Mittelwert des Phasenverschiebungssignals t_{PH} anzusehen und bildet eine Analogregelgröße des Frequenzreglers 13.

Fig. 4 zeigt einen stabilen Zustand. Das geglättete Phasenverschiebungssignal U_{ϕ} ist gleich dem Referenzsignal U₀.

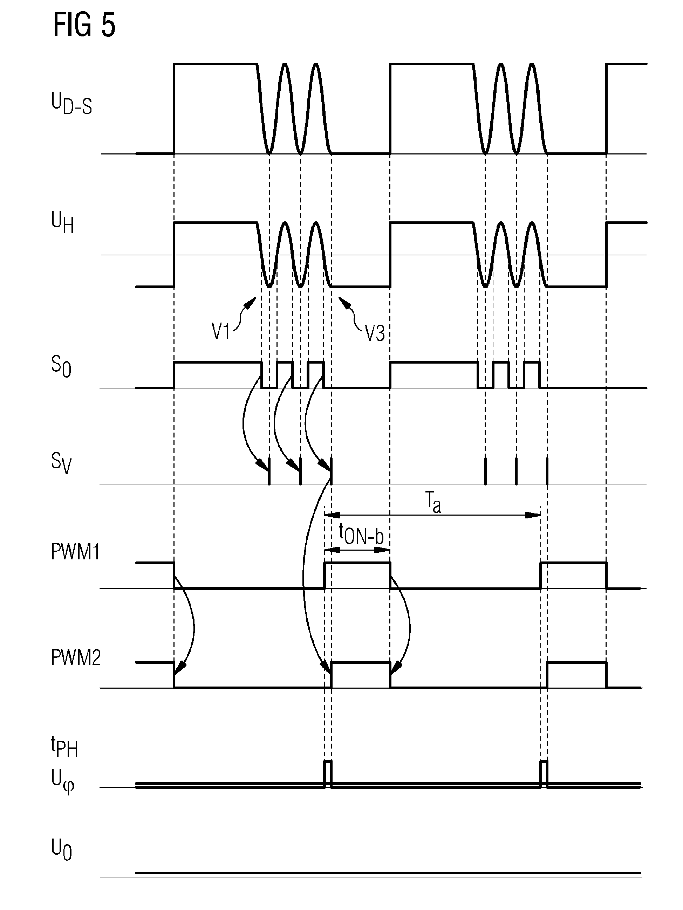

In Fig. 5 sind die Signale dargestellt, wenn der Schaltregler 1 einen früheren Einschaltzeitpunkt bzw. eine länger Einschaltzeit vorgibt. Die Taktdauer Tₐ bleibt zunächst konstant, die Einschaltdauer t_{ON-a} des Schaltelements steigt auf einen höheren Wert t_{ON-b} .

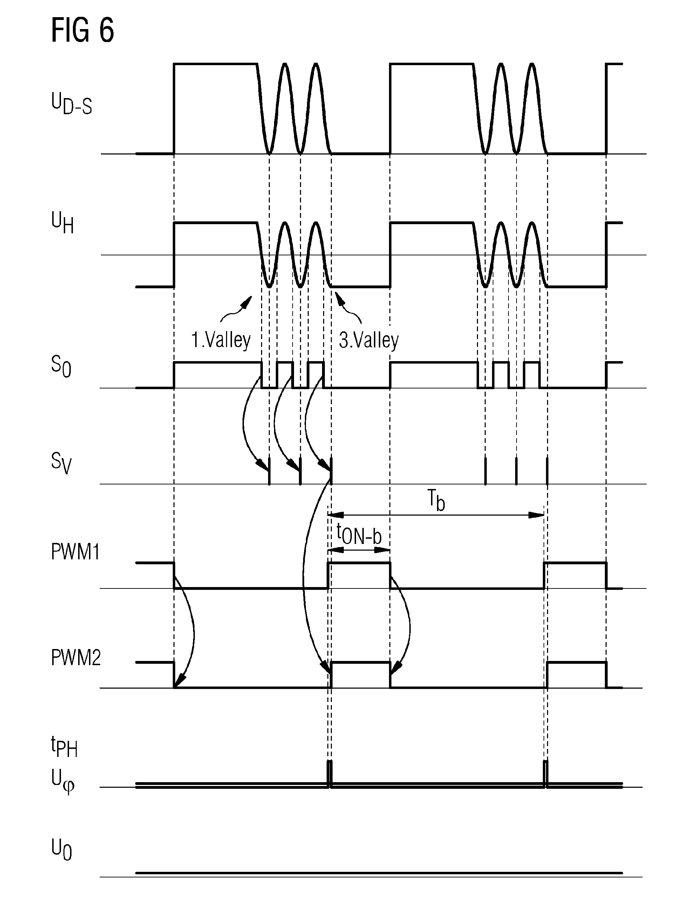

Infolgedessen erhöht sich die Phasenverschiebung. Das geglättete Phasenverschiebungssignal U_{ϕ} übersteigt das Referenzsignal U₀ und die Nachlaufsynchronisationsschaltung greift ein. Die Taktdauer T_{b} verlängert sich entsprechend einer vom Frequenzregler 13 reduzierten Taktfrequenz f_{b}, bis ein stabiler Arbeitspunkt b erreicht ist (Fig. 6).

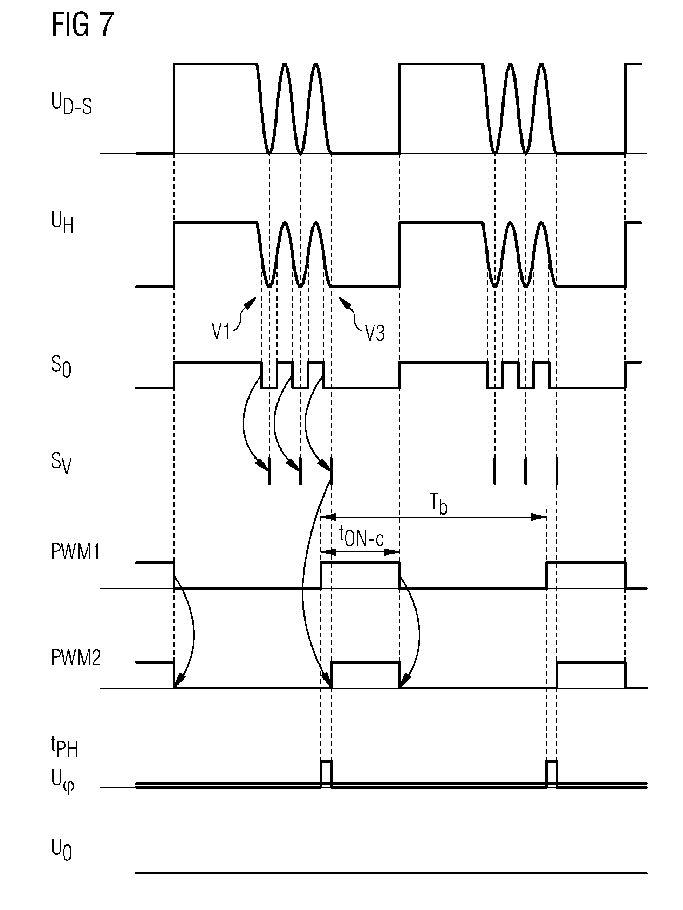

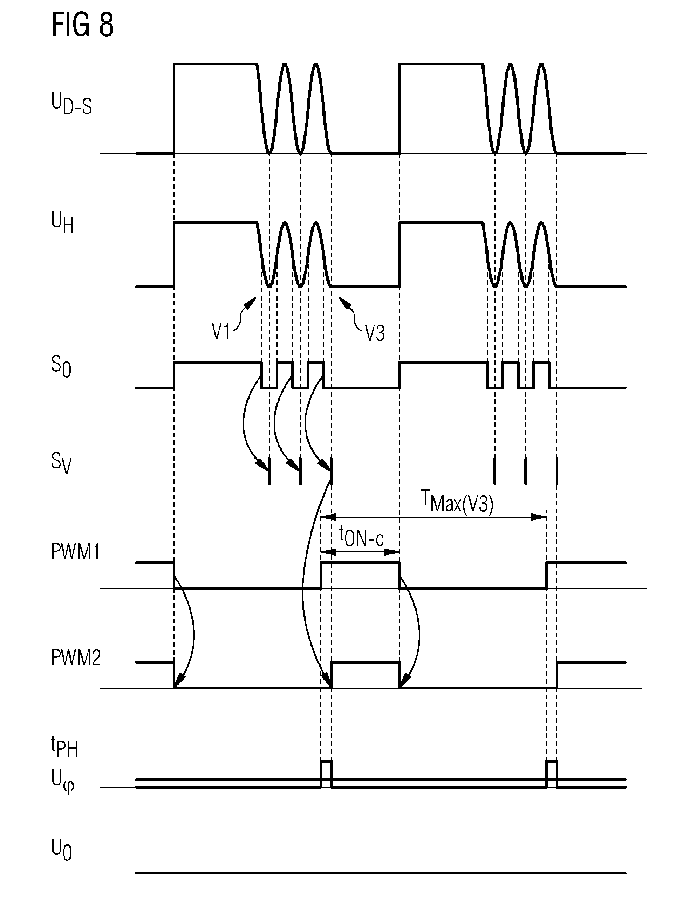

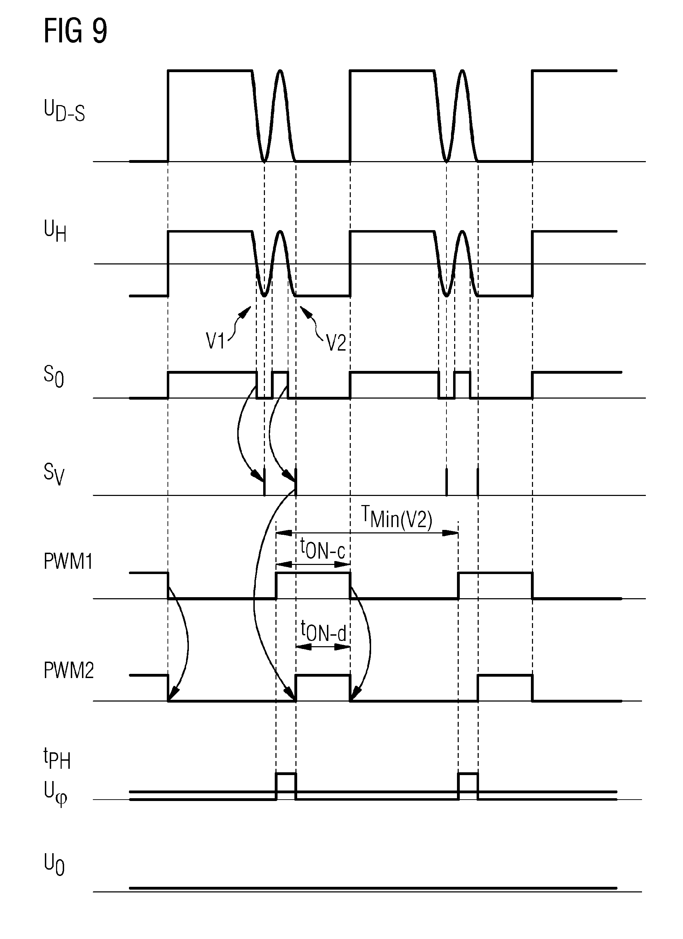

Eine weitere Vorverlegung des Aufwärtsflanke des ersten PWM-Signals PWM1 verlängert die vorgegebene Einschaltdauer t_{ON-C} wiederum (Fig. 7). Die Taktfrequenz f erreicht einen Minimalwert, entsprechend erreicht die Taktdauer T_{Max(v3)} ein Maximum (Fig. 8). Die Umkippschaltung 12 bewirkt einen Frequenzsprung nach oben bzw. eine Sprung zu einer minimalen Taktdauer T_{Min(v2)}, welcher der nächstniedrigeren Valley-Ordnungszahl zugeordnet ist. Die vorgegebene Einschaltdauer t_{ON-C} bleibt zunächst unverändert, wodurch sich eine starke Phasenverschiebung ergibt, weil das zweite PWM-Signal PWM2 bereits eine kürzere Einschaltdauer t_{ON-d} bewirkt (Fig. 9).

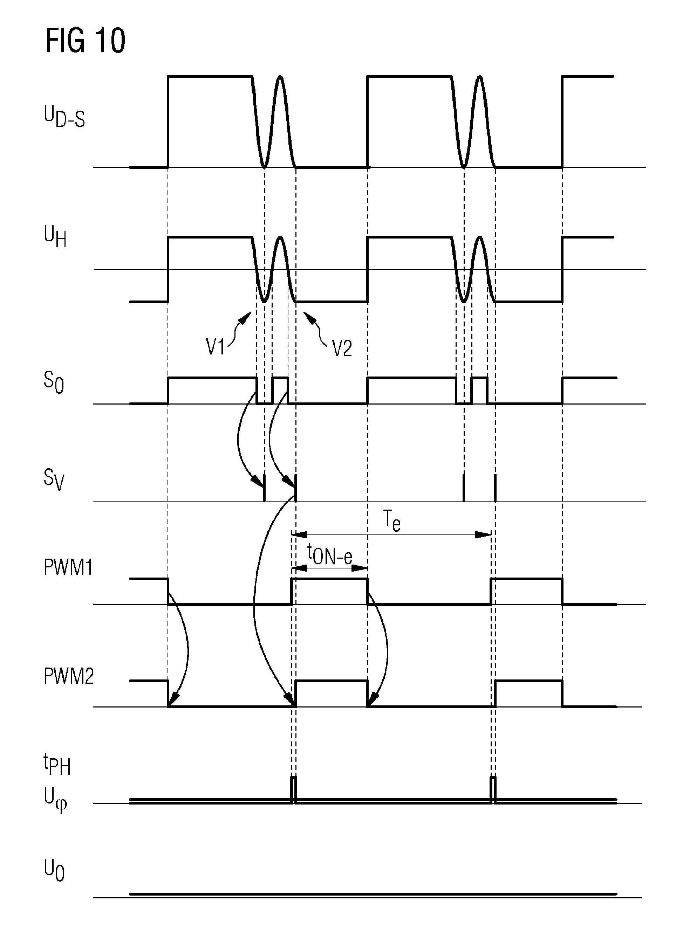

Der Frequenzregler 13 gibt sodann eine niedrigere Taktfrequenz fₑ mit entsprechend hoher Taktdauer Tₑ vor, bis in einem stabilen Arbeitspunkt e die vorgegebene Einschaltdauer t_{ON-e} die vorgegebne Leistung Pₑ bewirkt (Fig. 10).

Als Voraussetzung für die Umschaltung vom dritten Valley V3 zum zweiten Valley V2 muss die Periodendauer der Resonanzschwingung kleiner sein als die Differenz zwischen maximaler Taktdauer T_{Max (V3)} und minimaler Taktdauer T_{Min (V2)} .

Die Schnelligkeit der Umschaltung von einem Valley zu einem Valley mit niedriger Ordnungszahl hängt von der Schnelligkeit des Frequenzreglers 13 und der Schnelligkeit der Bewertung der Phasenverschiebung ab. Bei einer weiteren Leistungssteigerung würde der beschriebene Vorgang zwischen Arbeitspunkten des zweiten Valley V2 und des ersten Valley V1 ablaufen.

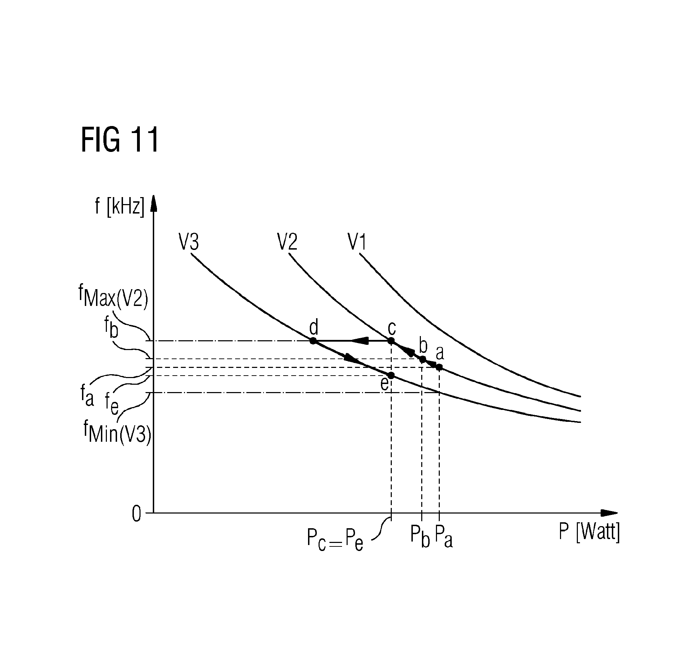

In Fig. 11 ist ausgehend von einem stabilen Arbeitspunkt a eine Reduktion der Leistung P angegeben, bis ein Arbeitspunkt c mit einer maximalen Taktfrequenz f_{Max (V2)} erreicht wird. Bei gleichbleibender Taktfrequenz f erfolgt ein Sprung zum Arbeitspunkt d auf der Kennlinie des Valley V3 mit der nächsthöheren Ordnungszahl. Dabei fällt die Leistung P ab und der Frequenzregler regelt wieder auf einen Arbeitspunkt mit der vorgegebenen Leistung Pₑ=P_{c} mit einer entsprechenden Taktfrequenz fₑ.

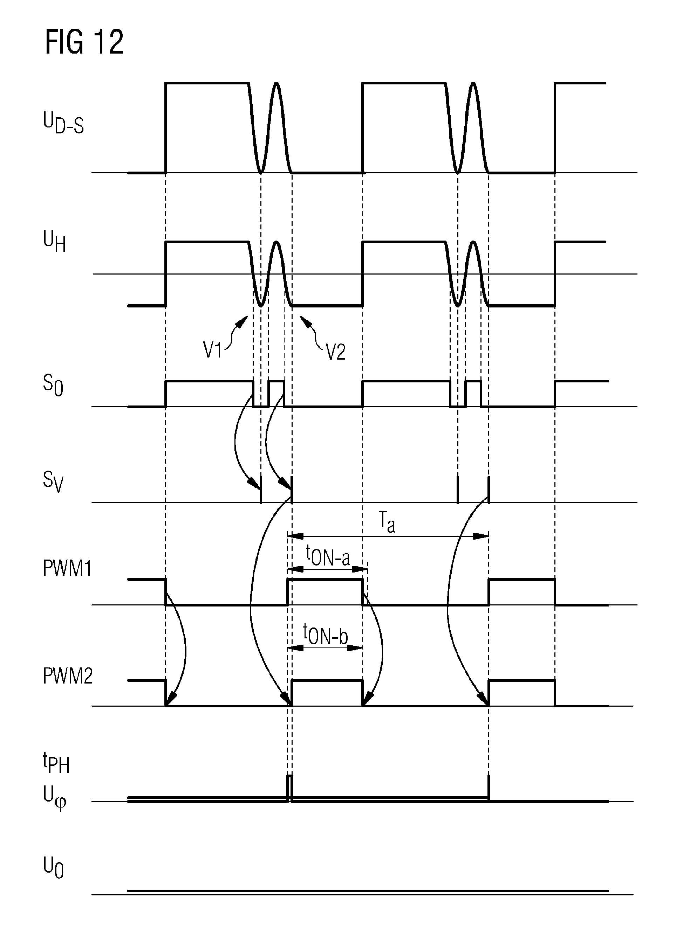

Die bei der Leistungsreduktion auftretenden Signaländerungen über der Zeit sind in den Figuren 12-16 dargestellt.

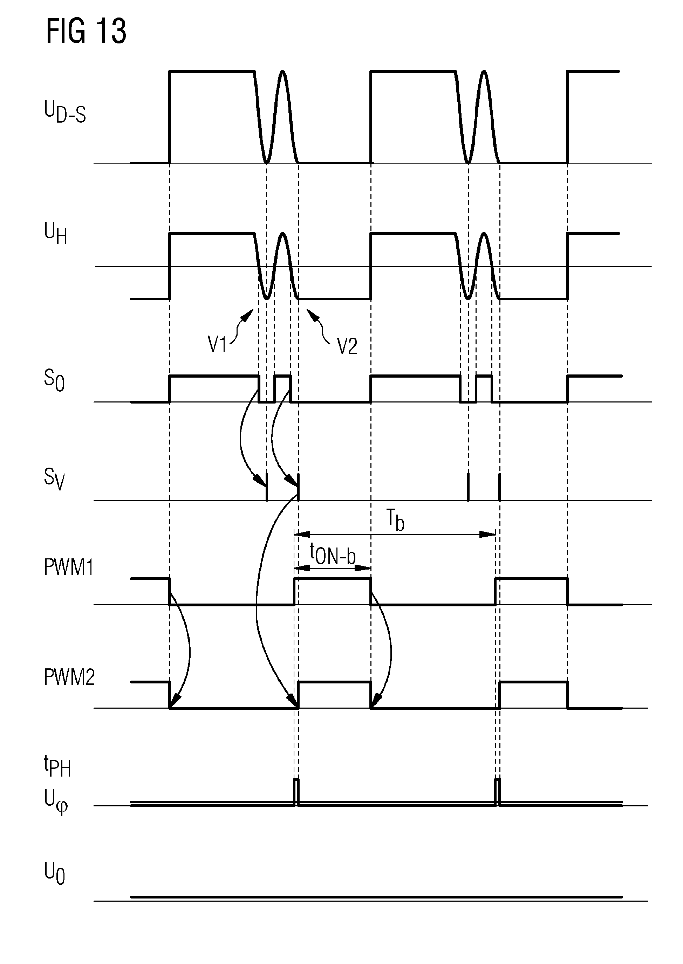

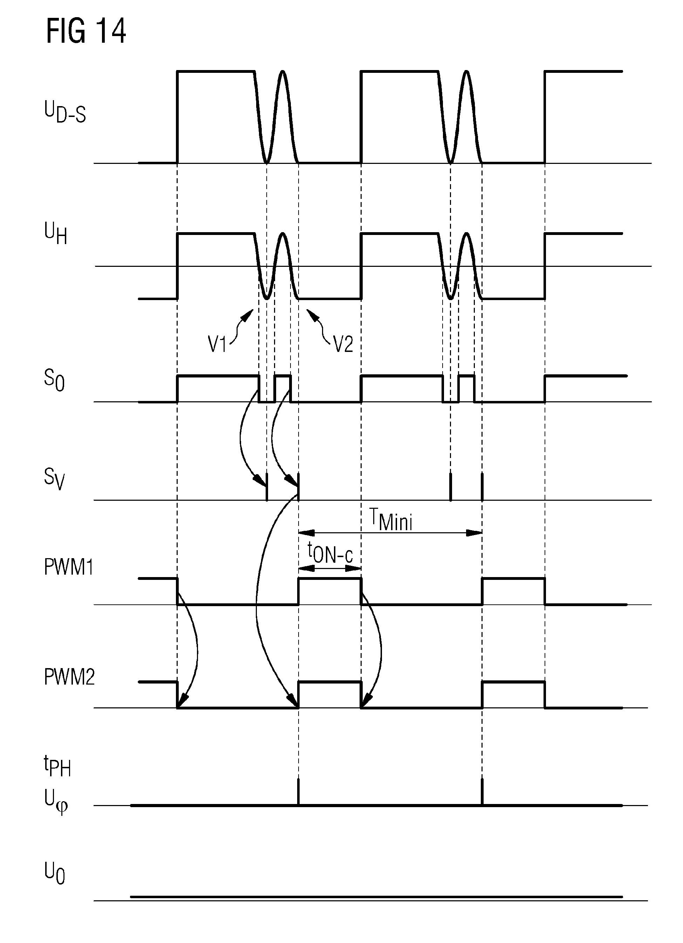

Zunächst verkürzt sich die vorgegebene Einschaltdauer t_{On-b} und das geglättete Phasenverschiebungssignal U_{ϕ} wird kleiner als das Referenzsignal U₀ (Fig. 12). Dadurch steigt die Stellgröße des Frequenzreglers 13 an, wodurch eine höhere Taktfrequenz f mit entsprechend verkürzter Taktdauer T_{b} vorgegeben wird (Fig. 13). Ein noch stabiler Arbeitspunkt c mit weiter reduzierter Einschaltdauer t_{On-c} ist erreicht, wenn die Taktfrequenz ein Maximum bzw. die Taktdauer T_{Min} ein Minimum erreicht (Fig. 14). Das geglättete Phasenverschiebungssignal U_{ϕ} ist dann fast gleich Null.

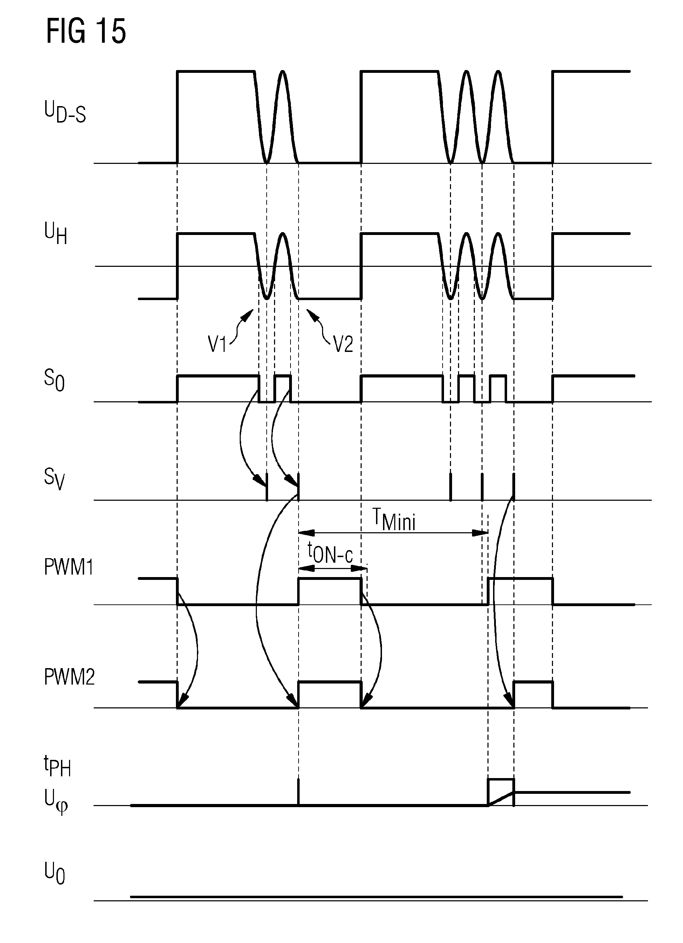

Bei einer weiteren Leistungsreduzierung entsteht eine große Phasenverschiebung zwischen den beiden PWM-Signalen PWM1 und PWM2, weil das zweite PWM-Signal PWM2 bereits einen Einschaltzeitpunkt beim dritten Valley V3 vorgibt (Fig. 15). Dazu wird beispielsweise die Bedingung vorgegeben, dass eine Aufwärtsflanke des zweiten PWM-Signals PWM2 beim zeitlich nächsten Valley nach einer Aufwärtsflanke des ersten PWM-Signals PWM1 auftritt. Infolge der Leistungsreduktion verzögert sich die Aufwärtsflanke des ersten PWM-Signals PWM1, sodass diese Aufwärtsflanke dem zweiten Valley V2 zeitlich nacheilt. Beim zweiten Valley V2 wird noch keine Aufwärtsflanke des zweiten PWM-Signals PWM2 getriggert, dies geschieht erst beim dritten Valley V3.

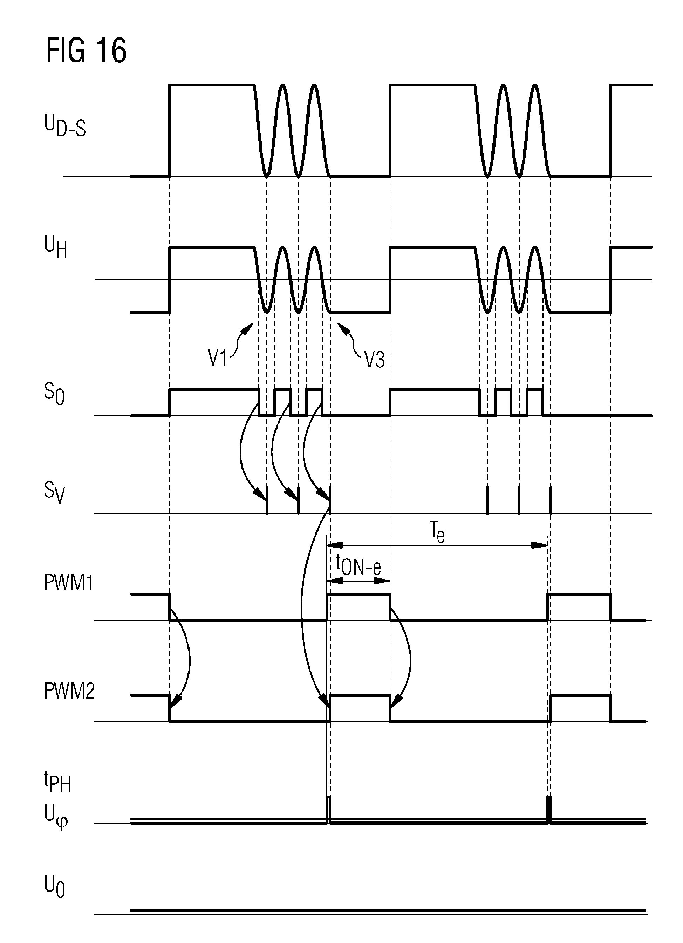

Die Nachlaufsynchronisationsschaltung bewirkt eine Synchronisation des ersten PWM-Signals PWM1 mit dem zweiten PWM-Signal PWM2. Die dabei abgefallene Leistung P wird mittels Frequenzregler 13 wieder auf die vorgegebene Leistung Pₑ geregelt, indem eine höhere Frequenz vorgegeben wird (Fig. 16).

## Patentansprüche

1. Verfahren zur Regelung eines Schaltwandlers (6) in einem quasiresonanten Betrieb, wobei mittels eines PWM-Schaltreglers (1) ein erstes PWM-Signal (PWM1) mit einer variablen Taktfrequenz (f) erzeugt wird, **dadurch gekennzeichnet, dass** ein Schaltelement mit einem zweiten PWM-Signal (PWM2) angesteuert wird, wobei das zweite PWM-Signal (PWM2) mittels eines Spannungsminimumsdetektors gebildet wird und jeder Einschaltimpuls des zweiten PWM-Signals (PWM2) synchronisiert ist mit einem Valley (V1, V2, V3) einer schwingenden Spannung (U_{D-S}), welche an dem Schaltelement anliegt und dass mittels einer Nachlaufsynchronisationsschaltung durch Veränderung der Taktfrequenz (f) eine Phasenverschiebung zwischen dem ersten PWM-Signal (PWM1) und dem zweiten PWM-Signal (PWM2) gegen Null geregelt wird.

2. Verfahren nach Anspruch 1, **dadurch gekennzeichnet, dass** mittels eines Phasendetektors (3) die Phasenverschiebung zwischen dem ersten PWM-Signal (PWM1) und dem zweiten PWM-Signal (PWM2) ermittelt wird und dass mittels eines Frequenzreglers (13) durch Verstellen der Taktfrequenz (f) des PWM-Schaltreglers (1) die Phasenverschiebung gegen Null geregelt wird.

3. Verfahren nach Anspruch 1 oder 2, **dadurch gekennzeichnet, dass** für die Taktfrequenz (f) eine Minimalfrequenz und eine Maximalfrequenz vorgegeben werden und dass bei erreichter Minimalfrequenz mittels einer Umkippschaltung (12) die Taktfrequenz (f) auf die Maximalfrequenz erhöht wird und dass während der Frequenzerhöhung der Einschaltvorgang um eine Schwingungsperiode vorverlegt wird.

4. Verfahren nach Anspruch einem der Ansprüche 1 bis 3, **dadurch gekennzeichnet, dass** für die Taktfrequenz (f) eine Maximalfrequenz vorgegeben wird und dass bei erreichter Maximalfrequenz der Einschaltvorgang um eine Schwingungsperiode verzögert wird.

5. Verfahren nach Anspruch 3 oder 4, **dadurch gekennzeichnet, dass** für jede Valley-Ordnungszahl in einem Speicher ein Bereich für die Taktfrequenz (f) vorgegeben wird.

6. Schaltwandleranordnung zum quasiresontenten Schalten, umfassend einen PWM-Schaltregler (1) zur Erzeugung eines ersten PWM-Signals (PWM1), ein Schaltelement sowie einen Spannungsminimumsdetektor zur Erkennung eines Spannungsminimums am Schaltelement, **dadurch gekennzeichnet, dass** ein aus dem Spannungsminimumsdetektor abgeleitetes zweiten PWM-Signal (PWM2) und das erste PWM-Signal (PWM1) einem Phasendetektor (3) zugeführt sind und dass ein geglättetes Phasenverschiebungssignal (U_{ϕ}) dem Frequenzregler (13) als Regelgröße zugeführt ist, um die Phasenverschiebung gegen Null zu regeln.

7. Schaltwandleranordnung nach Anspruch 6, **dadurch gekennzeichnet, dass** der Spannungsminimumsdetektor als Nulldurchgangsdetektor (7) mit nachgeschaltetem Verzögerungsglied (8) ausgebildet ist.
